# NEW EUROPEAN PATENT SPECIFICATION

(11) **EP 2 440 036 B2**
(45) Date of publication and mention of the opposition decision: **04.03.2020**
(45) Mention of the grant of the patent: 16.11.2016
(21) Application number: 10721032.0
(22) Date of filing: 03.06.2010
(51) Int. Cl.: A01J 7/02

(54) **A WASHING SYSTEM FOR WASHING A TEAT CLEANING APPARATUS**
WASCHSYSTEM FÜR EINEN ZITZENREINIGER
SYSTÈME DE LAVAGE D'UN DISPOSITIF DE NETTOYAGE DE TRAYON

(30) Priority: 09.06.2009 SE 0950425
(43) Date of publication of application: 18.04.2012
(73) Proprietor: DeLaval Holding AB, 147 21 Tumba (SE)
(72) Inventor: BOSMA, Epke, 8744 EN, Schettens (NL)
(74) Representative: Lilliehorn, Tobias
(86) International application number: PCT/EP2010/057794
(87) International publication number: WO 2010/142601

(56) References cited:
- EP-A1- 0 603 150
- EP-A2- 1 815 737
- WO-A1-01/19174
- WO-A1-98/42182
- WO-A1-99/03331
- DE-A1- 19 541 646
- GB-A- 628 761
- SU-A- 803 910
- SU-A- 954 067
- SU-A1- 1 314 984
- US-A- 5 678 506
- US-A1- 2006 174 922
- A.J. Bramley Et Al: "Milk Hygiene and Machine Milking" In: "Machine Milking and Lactation", 1 January 1992 (1992-01-01), XP055408447, pages 380-391,
- SCHÖN, H. ET AL: "Automatische Melksysteme", 1 January 2000 (2000-01-01), XP055408450, ISBN: 3-7843-2119-4 pages 41-43 and 84-86,

## Description

### THE BACKGROUND OF THE INVENTION AND PRIOR ART

The present invention relates to a washing system for washing a teat cleaning apparatus, wherein the washing system comprises an inlet passage adapted to convey washing liquid to at least the teat cleaning member of the teat cleaning apparatus.

Many times, the teats of a milking animal are cleaned by a teat cleaning apparatus before the teat cups are attached to the teats. The teat cleaning apparatus may comprise a teat cleaning cup provided with means for supplying cleaning liquid to a teat in the teat cup. Furthermore, the teat cleaning apparatus may comprise an outlet conduit adapted to remove the used teat cleaning liquid from the teat cleaning cup and a container adapted to receive the used teat cleaning liquid. Alternatively, the teat cleaning apparatus may comprise rollers, brushes, belts, sponges, cloths or the like which together with a cleaning liquid performs a cleaning treatment of the teats.

The teat cleaning apparatus has to be washed with regular intervals. It is known to use a common washing system for washing the teat cleaning apparatus and the milking equipment in a milking stall. In this case, washing liquid is supplied to and circulated in a circuit in which the washing liquid washes both the teat cleaning apparatus and the milking equipment. However, the teat cleaning cup may be relatively dirty. Thereby, the washing liquid, which comes in contact with the teat cleaning cup, may become contaminated by bacteria and materials which are not allowed to be mixed with the milk in the milking stall. Therefore, it is not suitable to use such contaminated washing liquid for washing milking equipment in a milking stall such as teat cups, milk conduits and milk tanks.

### SUMMARY OF THE INVENTION

The object of the present invention is to provide a washing system for washing a teat cleaning apparatus in an effective manner and where the used washing liquid does not risk coming in contact with other components with higher hygienic requirements.

This object is achieved by the washing system initially defined, which is characterised in that the washing system comprises a return passage adapted to recirculate washing liquid from the teat cleaning apparatus to the inlet passage such that a closed separate flow circuit is formed for the washing liquid, circulating means adapted to circulate the washing liquid in the separate closed flow circuit during a washing process of at least the teat cleaning member of the teat cleaning apparatus and a closed flow passage for circulation of washing liquid through milking equipment. Thus, the washing system comprises a separate closed flow circuit in which the washing liquid only cleans the teat cleaning apparatus. Since the flow circuit is separate and closed, there is no risk that the washing liquid will come in contact with other components in the milking stall such as teat cups, milk conduits and milk tanks which have higher hygienic requirements. The return passage may be formed by a return conduit and the inlet passage may be formed by an inlet conduit. The teat cleaning member of the teat cleaning apparatus may be a teat cleaning cup, one or several rollers, brushes, belts, sponges, cloths or the like which together with a cleaning liquid is adapted to perform a cleaning process of the teats of a milking animal. The washing system may supply cleaning liquid to the closed circuit for washing the teat cleaning apparatus and the closed circuit for washing the milking equipment at the same time. Thereafter, the washing liquid is circulated during a predetermined period of time in the two separate circuits. When the washing processes have been finished, the used washing liquid is drawn off from the respective separate circuits.

According to an embodiment of the invention, the washing system comprises a connecting member adapted to be connected to the teat cleaning member of the teat cleaning apparatus when a washing process is to be performed. The teat cleaning member such as a teat cleaning cup, may be moved to the connecting member by means of, for example, a robot arm when a washing process is to be performed. Alternatively, the connecting member will be moved to the teat cleaning member. According to a third alternative, the teat cleaning member is parked on the connecting member when it not is used. The connecting member may comprise a part of the inlet passage, which is adapted to supply washing liquid to the teat cleaning member of the teat cleaning apparatus. The washing liquid may be supplied to the teat cleaning member by means of the connecting member through one or several outlet openings.

According to a preferred embodiment of the invention, the teat cleaning member comprises a recess adapted to receive a teat of an animal during a teat cleaning process, wherein washing liquid is adapted to flow into the recess of the teat cleaning member during a washing process. Such a recess of a teat cleaning cup comes in direct contact with the teats of a milking animal during the cleaning process of the teats. Since the teat of a milking animal may be very dirty, there is a great risk that the surfaces of the recess will be contaminated. The supply of washing liquid to the recess guarantees that it will be washed in a successful way. The teat cleaning apparatus may comprise an outlet passage connected to the teat cleaning member, wherein the washing liquid is adapted to flow through the out passage during a washing process. The outlet passage may be formed by the inner space of an outlet conduit connected to the teat cleaning member. The teat cleaning apparatus may comprise a container connected to the outlet passage, wherein the washing liquid is adapted to flow through this container during the washing process. Such a container may be used to receive used cleaning liquid when the teat cleaning apparatus is used to clean the teat of a milking animal.

According to an embodiment of the invention, the container is provided with a level meter adapted to measure the quantity of liquid in the container. Since the washing liquid is circulated in a closed circuit, it is suitable to supply a desired quantity of washing liquid to the circuit before the washing process is started. When the level meter indicates that the container has been filled with the desired quantity of washing liquid, the filling process of washing liquid to the circuit is ceased.

According to a further embodiment of the invention, the washing system comprises feeding means adapted to supply washing liquid to the inlet passage. Such feeding means may be able to supply washing liquid with a desired composition and temperature to the inlet passage. The feeding means may comprise a washing liquid source, a feeding conduit, and a control valve in the feeding conduit adapted to control the supply of washing liquid from the washing liquid source to the inlet passage. The washing source may be a washing unit supplying washing liquid with a desired composition and temperature to a washing trough which supplies the washing liquid to the feeding conduit.

According to a further embodiment of the invention, the circulating means comprises a pump member arranged in the return passage. A relatively small pump may be used to circulate the washing liquid in the closed circuit during the washing process. The pump may be of different kinds. It is also possible to use other kinds of circulating means than pumps.

According to a further embodiment of the invention, the washing system comprises a one-way valve arranged in the inlet passage. Such a one-way valve guarantees that the supplied washing liquid flows in a desired direction in the circuit. The washing system may comprise a control unit adapted to control the washing process of the teat cleaning apparatus. The control unit may be a computer or the like provided with a suitable software for this purpose.

According to a further embodiment of the invention, the washing liquid is adapted to be circulated in the closed flow circuit during a predetermined period of time during a cleaning process of the teat cleaning apparatus. The pump member may, for example, circulate the washing liquid during a period of time of about six minutes. Thereby, the teat cleaning apparatus achieves an effective washing process. Preferably, the washing system comprises drain means adapted to draw off washing liquid from the circuit when a washing process has been finished. The drain means may be arranged in the teat cleaning apparatus and be the same drain means as used for drawing off used cleaning liquid from the teat cleaning apparatus after a cleaning process of the teats of a milking animal has been finished.

### BRIEF DESCRIPTION OF THE DRAWINGS

The present invention is now to be explained more closely by means of preferred embodiments, which are disclosed as examples, and with reference to the attached drawings.
- Fig 1: shows a washing system according to a first embodiment of the invention and
- Fig 2: shows a washing system according to a second embodiment of the invention.

### BRIEF DESCRIPTION OF PREFERRED EMBODIMENTS OF THE INVENTION

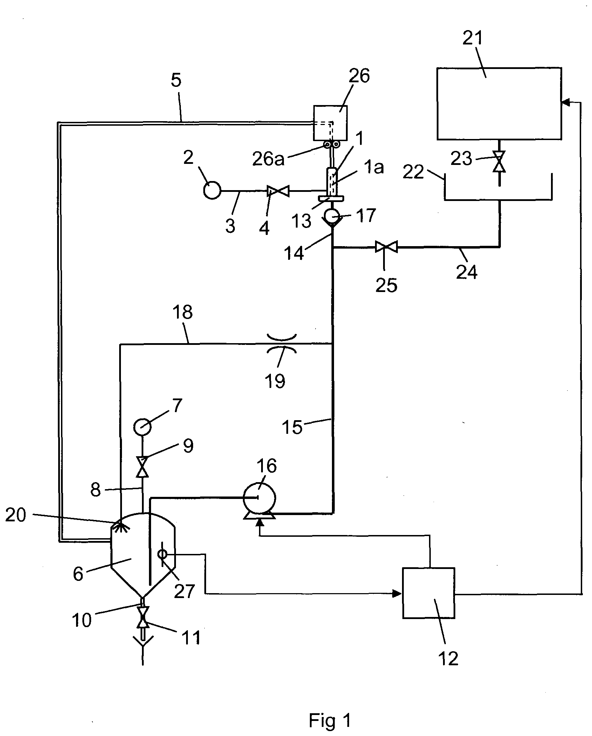

Fig 1 shows a teat cleaning apparatus for cleaning teats of cows in a milking stall. Preferably, the teat cleaning apparatus is used for cleaning the teats of a cow before a milking process is started in the milking stall. The teat cleaning apparatus comprises a teat cleaning member in the form of a teat cleaning cup 1. The teat cleaning cup 1 comprises a recess 1 a adapted to receive a teat during a cleaning process. The teat cleaning apparatus comprises feeding means adapted to supply cleaning liquid to the teat in the teat cleaning cup 1 during a cleaning process. The feeding means comprises a cleaning liquid source 2, a feeding line 3 and a control valve 4. An outlet conduit 5 is connected to the teat cleaning cup 1. The outlet conduit 5 is preferable flexible. The outlet conduit 5 is adapted to convey cleaning liquid from the teat cleaning cup 1 to a container 6 of the teat cleaning apparatus during a cleaning process of a teat. A vacuum source 7 is connectable to the container 6 by means of a vacuum line 8 and a control valve 9. A drain line 10 and a control valve 11 are arranged at a bottom portion of the container 6. A control unit 12 is adapted to control the teat cleaning apparatus by controlling the control valves 4, 9, 11.

A milking robot or an operator moves the teat cleaning cup 1 in proper order to the teats of a cow for cleaning the teats before a milking process is started. As soon as a teat has been moved into the recess 1 a of the teat cleaning cup 1, the control unit 12 opens the control valve 4 such that cleaning liquid is supplied from the cleaning liquid source 2, via the inlet line 3, to the teat in the teat cleaning cup 1. At the same time, the control unit 12 opens the control valve 9 such that a vacuum pressure is applied, via the vacuum line 8, to the inner space of the container 6 and the outlet conduit 5. The vacuum pressure in the outlet conduit 5 helps keeping the teat in a predetermined position in the teat cleaning cup 1 at the same time as it sucks out used cleaning liquid from the inner space 1 of the teat cleaning cup 1. The used cleaning liquid flows through the outlet conduit 5 to the container 6. When the cleaning process of a teat is finished, the control unit 12 closes the control valve 4 such that the supply of cleaning liquid to the teat cleaning cup 1 is ceased. The control unit closes the control valve 9 such that the connection between the vacuum source 7 and the container 6 is ceased. The teat cleaning cup 1 is moved from the teat and to the next teat. When all teats of a cow have been cleaned, the teat cleaning cup is retracted to a parking position in a storing device 26. The parking position is defined by a number of rollers 26. The opening to the recess 1 a of the teat cleaning cup 1 is directed downwards in the parked position. Finally, the control unit 12 opens the control valve 11 such that the used cleaning liquid collected in the container 6 is drained off via the drain line 10.

The teats of the cows may be very dirty and the teat cleaning apparatus has to be washed with regular intervals. A washing system for washing the teat cleaning apparatus is shown in Fig. 1. The washing system comprises a connecting member 13 adapted to be connected to the teat cleaning cup 1 when a washing process is to be performed. The connecting member 13 comprises a plate shaped portion adapted to support the teat cleaning cup 1 in a connected state. The washing system comprises an inlet conduit 14 adapted to convey washing liquid to the connecting member 13. The inlet conduit 14 ends in one or several nozzles of the connecting member 13 from which the washing liquid is supplied to the recess 1 a of the teat cleaning cup 1. The washing liquid is adapted to be supplied with a pressure such that it flows from the recess 1 a of the teat cleaning cup 1 into the outlet conduit 5 and to the container 6 of the teat cleaning apparatus. The washing system comprises a return conduit 15 adapted to recirculate washing liquid from the container 6 of the teat cleaning apparatus to the inlet conduit 14. A closed flow circuit for the washing liquid is formed by the return conduit 15, the inlet conduit 14 and the flow passages in the teat cleaning apparatus. The return conduit 15 comprises a pump 16 adapted to circulate the washing liquid in the closed circuit during a washing process of the teat cleaning apparatus. A one-way valve 17 is arranged in the inlet conduit 14. A conduit 18 is adapted to convey a part of the washing liquid in the return conduit 14 back to the container 6. The conduit 18 is provided with a throttle valve 19 such that only a smaller part of the washing liquid in the return conduit 15 is recirculated to the container 6 via the conduit 18. A nozzle 20 is provided at an end of the conduit 18. The nozzle 20 is adapted to inject the washing liquid in the form of a plurality of divergent jets such that the washing liquid is supplied to substantially all inner surfaces of the container 6.

The washing system comprises a washing unit 21 adapted to supply washing liquid of a desired composition and temperature to a washing trough 22 via a control valve 23. A feeding conduit 24 is adapted to convey washing liquid from the washing trough 22 to the inlet conduit 14. The feeding conduit 24 comprises a control valve 25. The container 6 comprises a level meter 27. The control unit 12 is also adapted to control the washing process of the teat cleaning apparatus.

When a washing process is to be performed of the teat cleaning apparatus, the control unit 12 activates the washing unit 21 such that it generates washing liquid with a desired composition and temperature. The control unit 12 opens the control valve 23 such that the washing liquid is supplied to the washing trough 22. The control unit 12 opens the control valve 25 such that washing liquid flows from the washing trough 22 and the feeding conduit 24 to the inlet conduit 14. The supplied washing liquid flows then through the one-way valve 17 to the connecting member 13. The washing liquid is then supplied to the recess 1 a of the teat cleaning cup 1 by means of the nozzle of the connecting member 13. Thereafter, the washing liquid flows into the outlet conduit 5 and to the container 6. The control unit 12 receives information from the level meter 27 about the washing liquid level in the container 6. As soon as a predetermined washing liquid level is reached in the container 6, the control unit 12 closes the control valves 23, 25 such that no more washing liquid is supplied to the inlet conduit 14. The closed circuit formed by the inlet conduit 14, the teat cleaning apparatus and the return conduit 15 is now filled with a required quantity of washing liquid.

The control unit 12 starts the pump 16. The pump circulates washing liquid from the container 6 to the return conduit 15. A smaller part of the washing liquid flows from the return conduit 15 into the conduit 18 and back to the container 6. However, the main flow in the return conduit 15 flows to the inlet conduit 14. The washing liquid flows from the inlet conduit 14, via the one-way valve 17 and the connecting member 13, into the recess 1 a of the teat cleaning cup 1. The washing liquid flows from the teat cleaning cup into the outlet conduit 5 and back to the container 6. The pump 16 circulates the washing liquid during a predetermined period of time in the closed circuit. During the circulation of the washing liquid, it comes in contact with all inner surfaces of the teat cleaning apparatus which have been in contact with used cleaning liquid. The washing liquid removes particles and contaminations from the teat cleaning apparatus. When the washing process is finished, the control unit 12 opens the control valve 11 such that the washing liquid is removed via the drain line 10.

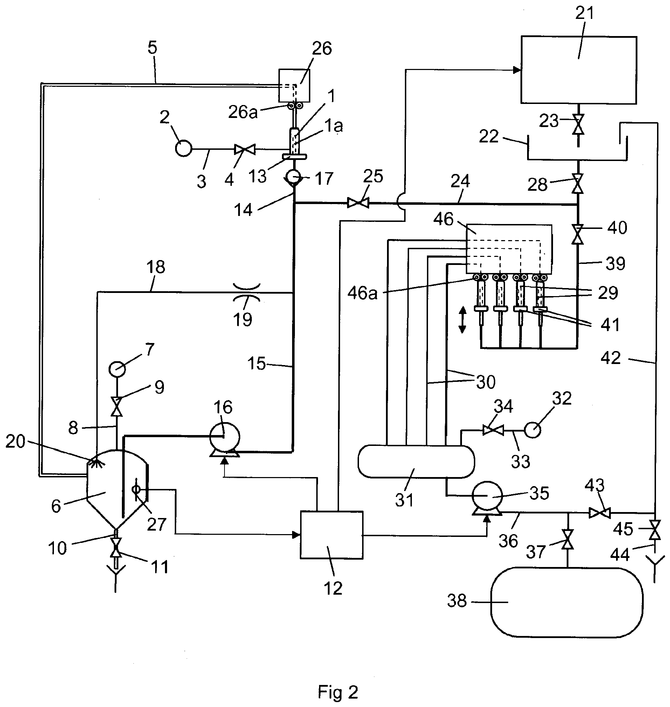

Fig. 2 shows an alternative embodiment of the washing system. In this case, the washing system is adapted to both wash the teat cleaning apparatus and milking equipment in a milking stall. The milking equipment in the milking stall comprises teat cups 29, milk conduits 30 adapted to transport milk from the teat cups 29, a milk receiver 31 adapted to receive the milk from the milk conduits 30 and a milk conduit 36 adapted to convey milk from the milk conduit 31 to a main milk tank 38. A vacuum source 32 is connectable to the milk tank 31 by means of a vacuum line 33 and a control valve 34. A pump 35 is arranged in the milk conduit 36. A control valve 37 is adapted to control the milk flow to the main tank 38. During a milking process, the teat cups 29 are attached to a cow in the milking stall. The control unit 12 opens the control valve 34 such that a vacuum pressure is applied to the milk receiver 31 and the milk conduits 30. Thereby, milk is sucked from the teat cups 29, via the milk conduits 30, to the milk receiver 31. The control unit 12 closes the control valve 34 when the milking process has been finished and activates the pump 35 such that it pumps the milk from the milk receiver 31, via the milk conduit 36, to the main milk tank 38. The teat cups 29 are retracted to a respective parking position in a storing device 49. The storing device 49 comprises rollers 49a adapted to define the parking positions of the teat cups 29. The storing device 49 may comprise the storing device 26.

The washing system comprises substantially the same components for washing the teat cleaning apparatus as in Fig. 1. Consequently, the washing system comprises a washing unit 21, a washing trough 22, a feeding conduit 24, an inlet conduit 14 and a return conduit 15. The washing unit 21, the washing trough 22 and a the feeding conduit 24 are used for supplying washing liquid to a circuit for washing the teat cleaning apparatus and to a circuit for washing the milking equipment. The washing system for washing the milking equipment comprises an inlet conduit 39 with a control valve 40 for conveying washing liquid from the feeding conduit 24 to connecting members 41 adapted to be connected to the teat cups 29 during a washing process. The connecting members 41 are movably arranged between a retracted position and a washing position in which they are connected to the teat cups 29. Furthermore, the washing system for washing the milking equipment comprises a return conduit 42 adapted to return washing liquid from the milk conduit 36 to the washing trough 22 during the washing process. A control valve 43 is adapted to control the flow of washing liquid from the milk conduit 36 to the return conduit 42. The return conduit 42 comprises a drain line 44 provided with a control valve 45.

When a washing process is to be performed, a milking robot or an operator moves the teat cleaning cup 1 from its parked position in the storing device 26 to a position on the connecting member 13 which is shown in Fig. 2. Alternatively, the connecting member is moved upwardly such that it comes in contact with the teat cleaning cup 1. At the same time, the connecting members 41 are moved upwardly such that they come in contact with the parked teat cups 29. The washing unit 21 supplies washing liquid to the washing trough 22. The washing liquid flows from the washing trough 22, via the open control valve 28, to the feeding conduit 24. Washing liquid is supplied from the feeding conduit 24 to the closed flow circuit for cleaning the teat cleaning apparatus via a control valve 25. At the same time, washing liquid is supplied from the feeding conduit 24 to the inlet conduit 39 of the flow circuit for cleaning the milking equipment via the control valve 40. When a desired quantity of washing liquid has been supplied to the respective circuits, the washing processes of the teat cleaning apparatus and the washing processes of the milking equipment are started. During the washing process, washing liquid is circulated in the respective closed circuits during a predetermined period of time. When the washing process of the teat cleaning apparatus is finished, the teat cleaning cup 1 is moved from the connecting member 13 to its parked position in the storing device 26 or the connecting member is moved upwardly such that it comes in contact with the teat cleaning cup 1. The control unit 12 opens the control valves 11 such that washing liquid is discharged from the circuit via the drain line 10. When the washing process of the milking equipment is finished, the connecting members 41 are moved from the teat cups 29 to a retracted position and the control unit 12 opens the control valves 45 such that washing liquid is discharged from the circuit via the drain line 44. Since the washing liquid is circulated in separate circuits during the washing processes and is discharged via separate drain means, the washing liquid used to wash the teat cleaning apparatus will not come in contact with any part of the milking equipment.

The invention is not restricted to the described embodiment but may be varied freely within the scope of the claims.

## Claims

1. A washing system for washing a teat cleaning apparatus, wherein the washing system comprises an inlet passage (14) adapted to convey washing liquid to at least a teat cleaning member (1) of the teat cleaning apparatus, **characterised in that** the washing system comprises a return passage (15) adapted to recirculate washing liquid from the teat cleaning apparatus to the inlet passage (14) such that a separate closed flow circuit is formed for the washing liquid, circulating means (16) adapted to circulate the washing liquid in the separate closed flow circuit during a washing process of at least the teat cleaning member (1) of the teat cleaning apparatus, and wherein the washing system also comprises a closed flow passage for circulation of washing liquid through milking equipment.

2. A washing system according to claim 1 or 2, **characterised in that** it comprises a connecting member (13) adapted to be connected to the teat cleaning member (1) of the teat cleaning apparatus when a washing process is to be performed.

3. A washing system according to claim 3, **characterised in that** the connecting member (13) comprises a part of the inlet passage (14), which is adapted to supply washing liquid to the teat cleaning member (1) of the teat cleaning apparatus.

4. A washing system according to any one of the preceding claims, **characterised in that** the teat cleaning member (1) comprises a recess (1a) adapted to receive at teat of an animal during a teat cleaning process, wherein washing liquid is adapted to flow into the recess (1a) of the teat cleaning member (1) during a washing process.

5. A washing system according to any one of the preceding claims, **characterised in that** the teat cleaning apparatus comprises an outlet passage (5) connected to the teat cleaning member (1), wherein the washing liquid is adapted to flow through the outlet passage (5) during a washing process.

6. A washing system according to claim 5,**characterised in that** the teat cleaning apparatus comprises a container (6) connected to the outlet passage (5), wherein the washing liquid is adapted to flow through this container (6) during the washing process.

7. A washing system according to claim 6, **characterised in that** the container (6) is provided with a level meter (27) adapted to measure the quantity of liquid in the container (6).

8. A washing system according to any one of the preceding claims, **characterised in that** it comprises feeding means (21-25) adapted to supply washing liquid to the inlet passage (14).

9. A washing system according to claim 8, **characterised in that** the feeding means comprises a washing liquid source (21, 22), an feeding conduit (24), and a control valve (25) in the feeding conduit (24) adapted to control the supply of washing liquid from the washing liquid source (21, 22) to the inlet passage (14).

10. A washing system according to any one of the preceding claims, **characterised in that** the circulating means comprises a pump member (16) arranged in the return passage (15).

11. A washing system according to any one of the preceding claims, **characterised in that** it comprises a one-way valve (17) arranged in the inlet passage (14).

12. A washing system according to any one of the preceding claims, **characterised in that** it comprises a control unit (12) adapted to control the washing process of the teat cleaning apparatus.

13. A washing system according to any one of the preceding claims, **characterised in that** the washing liquid is adapted to be circulated in the closed flow circuit during a predetermined period of time during a cleaning process of the teat cleaning apparatus.

14. A washing system according to any one of the preceding claims, **characterised in that** it comprises drain means (10, 11) adapted to draw off washing liquid from the circuit when a washing process has been finished.

## Patentansprüche

1. Waschsystem zum Waschen eines Zitzenreinigers, wobei das Waschsystem einen Einlaufkanal (14) umfasst, der so ausgelegt ist, dass er Waschflüssigkeit zu mindestens einem Zitzenreinigungselement (1) des Zitzenreinigers transportiert, **dadurch gekennzeichnet, dass** das Waschsystem einen Rückführkanal (15) umfasst, der so ausgelegt ist, dass er Waschflüssigkeit aus dem Zitzenreiniger im Kreislauf zum Einlaufkanal (14) zurückführt, sodass ein separater geschlossener Kreislauf für das Waschflüssigkeitsumlaufmittel (16) entsteht, das so ausgelegt ist, dass es die Waschflüssigkeit in dem separaten geschlossenen Kreislauf während eines Waschvorgangs von zumindest dem Zitzenreinigungselement (1) des Zitzenreinigers im Kreislauf führt, und wobei das Waschsystem ebenso einen geschlossenen Durchflusskanal für den Umlauf der Waschflüssigkeit durch die Melkanlage umfasst.

2. Waschsystem nach Anspruch 1 oder 2, **dadurch gekennzeichnet, dass** es ein Verbindungselement (13) umfasst, das so ausgelegt ist, dass es mit dem Zitzenreinigungselement (1) des Zitzenreinigers verbunden wird, wenn ein Waschvorgang durchgeführt werden soll.

3. Waschsystem nach Anspruch 3, **dadurch gekennzeichnet, dass** das Verbindungselement (13) einen Teil des Einlaufkanals (14) umfasst, der so ausgelegt ist, dass er dem Zitzenreinigungselement (1) des Zitzenreinigers Waschflüssigkeit zuführt.

4. Waschsystem nach einem der vorhergehenden Ansprüche, **dadurch gekennzeichnet, dass** das Zitzenreinigungselement (1) eine Aussparung (1a) umfasst, die so ausgelegt ist, dass sie während eines Zitzenreinigungsvorgangs eine Zitze eines Tiers aufnimmt, wobei Waschflüssigkeit so ausgelegt ist, dass sie während eines Waschvorgangs in die Aussparung (1a) des Zitzenreinigungselements (1) fließt.

5. Waschsystem nach einem der vorhergehenden Ansprüche, **dadurch gekennzeichnet, dass** der Zitzenreiniger einen Auslaufkanal (5) umfasst, der mit dem Zitzenreinigungselement (1) verbunden ist, wobei die Waschflüssigkeit so ausgelegt ist, dass sie während eines Waschvorgangs durch den Auslaufkanal (5) fließt.

6. Waschsystem nach Anspruch 5, **dadurch gekennzeichnet, dass** der Zitzenreiniger einen Behälter (6) umfasst, der mit dem Auslaufkanal (5) verbunden ist, wobei die Waschflüssigkeit so ausgelegt ist, dass sie während des Waschvorgangs durch diesen Behälter (6) hindurchfließt.

7. Waschsystem nach Anspruch 6, **dadurch gekennzeichnet, dass** der Behälter (6) mit einem Füllstandsmesser (27) versehen ist, der so ausgelegt ist, dass er die Flüssigkeitsmenge im Behälter (6) misst.

8. Waschsystem nach einem der vorhergehenden Ansprüche, **dadurch gekennzeichnet, dass** es ein Zuleitmittel (21 bis 25) umfasst, das so ausgelegt ist, dass es dem Einlaufkanal (14) Waschflüssigkeit zuführt.

9. Waschsystem nach Anspruch 8, **dadurch gekennzeichnet, dass** das Zuleitmittel eine Waschflüssigkeitsquelle (21, 22), eine Zuleitröhre (24), und ein Regelventil (25) in der Zuleitröhre (24) umfasst, das so ausgelegt ist, dass es die Zufuhr von Waschflüssigkeit aus der Waschflüssigkeitsquelle (21, 22) in den Einlaufkanal (14) regelt.

10. Waschsystem nach einem der vorhergehenden Ansprüche, **dadurch gekennzeichnet, dass** das Umlaufmittel ein Pumpenelement (16) umfasst, das im Rückführkanal (15) angeordnet ist.

11. Waschsystem nach einem der vorhergehenden Ansprüche, **dadurch gekennzeichnet, dass** es ein Rückschlagventil (17) umfasst, das in dem Einlaufkanal (14) angeordnet ist.

12. Waschsystem nach einem der vorhergehenden Ansprüche, **dadurch gekennzeichnet, dass** es eine Steuereinheit (12) umfasst, die so ausgelegt ist, dass sie den Waschvorgang des Zitzenreinigers steuert.

13. Waschsystem nach einem der vorhergehenden Ansprüche, **dadurch gekennzeichnet, dass** die Waschflüssigkeit so ausgelegt ist, dass sie während eines vorher festgelegten Zeitraums während eines Reinigungsvorgangs des Zitzenreinigers in dem geschlossenen Kreislauf im Kreislauf geführt wird.

14. Waschsystem nach einem der vorhergehenden Ansprüche, **dadurch gekennzeichnet, dass** es Ablaufmittel (10, 11) umfasst, die so ausgelegt sind, dass sie Waschflüssigkeit aus dem Kreislauf ablassen, wenn ein Waschvorgang abgeschlossen wurde.

## Revendications

1. Système de lavage destiné au lavage d'un dispositif de nettoyage de trayon, dans lequel le système de lavage comprend une voie d'entrée (14) adaptée pour transporter du liquide de lavage jusqu'à au moins un élément de nettoyage de trayon (1) du dispositif de nettoyage de trayon, **caractérisé en ce que** le système de lavage comprend une voie de retour (15) adaptée pour remettre en circulation du liquide de lavage du dispositif de nettoyage de trayon à la voie d'entrée (14) de telle sorte qu'un circuit d'écoulement fermé séparé est formé pour le liquide de lavage, un moyen de circulation (16) étant adapté pour faire circuler le liquide de lavage dans le circuit d'écoulement fermé séparé pendant un processus de lavage d'au moins l'élément de nettoyage de trayon (1) du dispositif de nettoyage de trayon, et dans lequel le système de lavage comprend également une voie d'écoulement fermée pour la circulation de liquide de lavage à travers un équipement de traite.

2. Système de lavage selon la revendication 1 ou 2, **caractérisé en ce qu'**il comprend un élément de liaison (13) adapté pour être relié à l'élément de nettoyage de trayon (1) du dispositif de nettoyage de trayon quand un processus de lavage doit être exécuté.

3. Système de lavage selon la revendication 3, **caractérisé en ce que** l'élément de liaison (13) comprend une partie de la voie d'entrée (14), qui est adaptée pour alimenter l'élément de nettoyage de trayon (1) du dispositif de nettoyage de trayon en liquide de lavage.

4. Système de lavage selon l'une quelconque des revendications précédentes, **caractérisé en ce que** l'élément de nettoyage de trayon (1) comprend une cavité (1a) adaptée pour recevoir un trayon d'un animal pendant un processus de nettoyage de trayon, du liquide de lavage étant adapté pour s'écouler dans la cavité (1a) de l'élément de nettoyage de trayon (1) pendant un processus de lavage.

5. Système de lavage selon l'une quelconque des revendications précédentes, **caractérisé en ce que** le dispositif de nettoyage de trayon comprend une voie de sortie (5) reliée à l'élément de nettoyage de trayon (1), le liquide de lavage étant adapté pour s'écouler à travers la voie de sortie (5) pendant un processus de lavage.

6. Système de lavage selon la revendication 5, **caractérisé en ce que** le dispositif de nettoyage de trayon comprend un contenant (6) relié à la voie de sortie (5), le liquide de lavage étant adapté pour s'écouler à travers ce contenant (6) pendant le processus de lavage.

7. Système de lavage selon la revendication 6, **caractérisé en ce que** le contenant (6) est doté d'un mesureur de niveau (27) adapté pour mesurer la quantité de liquide dans le contenant (6).

8. Système de lavage selon l'une quelconque des revendications précédentes, **caractérisé en ce qu'**il comprend un moyen d'acheminement (21-25) adapté pour alimenter la voie d'entrée (14) en liquide de lavage.

9. Système de lavage selon la revendication 8, **caractérisé en ce que** le moyen d'acheminement comprend une source de liquide de lavage (21, 22), un conduit d'acheminement (24) et une vanne de régulation (25) dans le conduit d'acheminement (24) adaptée pour réguler l'alimentation en liquide de lavage de la source de liquide de lavage (21, 22) à la voie d'entrée (14).

10. Système de lavage selon l'une quelconque des revendications précédentes, **caractérisé en ce que** le moyen de circulation comprend un élément de pompe (16) agencé dans la voie de retour (15).

11. Système de lavage selon l'une quelconque des revendications précédentes, **caractérisé en ce qu'**il comprend un clapet antiretour (17) agencé dans la voie d'entrée (14).

12. Système de lavage selon l'une quelconque des revendications précédentes, **caractérisé en ce qu'**il comprend une unité de commande (12) adaptée pour commander le processus de lavage du dispositif de nettoyage de trayon.

13. Système de lavage selon l'une quelconque des revendications précédentes, **caractérisé en ce que** le liquide de lavage est adapté pour circuler dans le circuit d'écoulement fermé pendant une période de temps prédéfinie pendant un processus de nettoyage du dispositif de nettoyage de trayon.

14. Système de lavage selon l'une quelconque des revendications précédentes, **caractérisé en ce qu'**il comprend des moyens d'évacuation (10, 11) adaptés pour drainer du liquide de lavage du circuit quand un processus de lavage a été terminé.
